# EUROPEAN PATENT APPLICATION

(11) **EP 4 530 114 A1**
(43) Date of publication of application: **02.04.2025**
(21) Application number: 24202635.9
(22) Date of filing: 25.09.2024
(51) Int. Cl.: B60L 1/00, B60L 15/20, B60L 58/12, B60L 58/13

(54) **POWER SYSTEM FOR TRANSPORTATION REFRIGERATION UNIT AND METHOD FOR CONTROLLING POWER THEREOF**

(30) Priority: 29.09.2023 US 202363586549 P
(71) Applicant: Carrier Corporation, Palm Beach Gardens, FL 33418 (US)
(72) Inventor: CHAPEAU, Lucas, 76520 Franqueville Saint Pierre (FR); VAN HASSEL, Bart, Palm Beach Gardens, FL 33418 (US); DONG, Liujia, Palm Beach Gardens, FL 33418 (US); VARIGONDA, Subbarao, Indianapolis, IN 46231 (US); BAGHERI, Morteza Haji, Syracuse, NY 13221 (US)
(74) Representative: Dehns

(57) **Abstract**

A power system (108) for a vehicle (100) having a Transportation Refrigeration Unit, TRU, (102) is disclosed. The power system (108) comprises an energy storage unit (204) adapted to supply power to the TRU (102). Further, the power system (108) comprises an axle generator (208) in communication with the energy storage unit (204) and is adapted to supply power to the energy storage unit (204) and the TRU (102). The power system (108) comprises a charging system (206) in communication with the energy storage unit (204), the axle generator (208), and the TRU (102). The charging system (206) is configured to monitor a State of Charge, SoC, of the energy storage unit (204), and is configured to determine at least one operational characteristic associated with the vehicle (100). The operational characteristic is indicative of at least a speeding condition of the vehicle (100). The charging system (206) is configured to control, based on the SoC and the operational characteristics, a power supply from the axle generator (208) to the energy storage unit (204).

## Description

### FIELD OF THE INVENTION

The invention relates to vehicles having a Transport Refrigeration Unit (TRU), and more specifically to a power system for such a vehicle and a method for controlling power supply to an energy storage unit of the power system.

### BACKGROUND

Vehicles, such as Light Commercial Vehicles (LCVs) or Heavy Commercial Vehicles, are generally deployed for transporting cargo via sea, rail, or road networks. Such vehicles usually include a cargo container for storing cargo to be transported. In order to maintain the quality of the goods in the cargo container, a refrigeration unit may be deployed to such cargo container of the vehicle. Typically, the refrigeration unit provides desired environmental parameters, such as temperature, pressure, humidity, and other conditions to the cargo container. Such refrigeration unit is either powered by an electric power source, a fuel-based power source, or a combination thereof. Further, the fuel-based power source is usually also used to charge the electric power source and power the refrigeration unit.

Currently, the fuel-based power source charges the electric power source to keep the State of Charge (SoC) thereof close or equal to 100%. For instance, whenever the SoC of the electric power source drops below 100%, the fuel-based power source is used to maintain the SoC at 100%. Therefore, such a charging strategy results in limited utilization of the electric power source or green energy from the electric power source to supply power to the refrigeration unit. Also, charging the electric power source whenever the SoC drops below 100% may increase the overall fuel consumption and might be undesirable from the perspective of fuel emissions.

Therefore, it is desirable to provide a system and a method that may allow the electric power source to discharge to maximize the usage of green energy from such source.

### SUMMARY

This summary is provided to introduce a selection of concepts, in a simplified format, that are further described in the detailed description of the specification. This summary is neither intended to identify key or essential inventive concepts of the invention and nor is it intended for determining the scope of the invention, which is as defined by the appended claims.

According to a first aspect of the invention a power system for a vehicle having a Transportation Refrigeration Unit (TRU) is disclosed. The power system comprises an energy storage unit adapted to supply power to the TRU. Further, the power system comprises an axle generator in communication with the energy storage unit and is adapted to supply power to at least one of the energy storage unit and the TRU. The power system comprises a charging system in communication with the energy storage unit, the axle generator, and the TRU. The charging system is configured to monitor a State of Charge (SoC) of the energy storage unit. Further, the charging system is configured to determine at least one operational characteristic associated with the vehicle. The at least one operational characteristic is indicative of at least a speeding condition of the vehicle. The charging system is configured to control, based on the monitored SoC and the determined operational characteristics, a power supply from the axle generator to the energy storage unit.

Optionally, the speeding condition is indicative of at least one of an acceleration condition, a de-acceleration condition, a coasting condition, and a braking condition.

Optionally, to control the power supply, the charging system is configured to select a charging strategy from a plurality of charging strategies to charge the energy storage unit based on the monitored SoC and the determined operational characteristic. Further, the charging system is configured to control, based on the selected charging strategy, the power supply from the axle generator to the energy storage unit.

Optionally, the plurality of charging strategies comprises at least a reserve charging strategy, an adaptive charging strategy, and a critical charging strategy.

Optionally, the charging system comprises a battery management controller and a power management controller in communication with each other.

Optionally, to control the power supply, based on the selected charging strategy, from the axle generator to the energy storage unit, the charging system is configured to generate, by the battery management controller, an input associated with the selected charging strategy. The input is indicative of at least a charging rate and an amount of power to be supplied to the energy storage unit. Further, the charging system is configured to receive, by the power management controller, the generated input from the battery management controller. The charging system is configured to control, by the power management controller, the power supply from the axle generator to the energy storage unit based on the received input from the battery management controller.

Optionally, the battery management controller is configured to select the reserve charging strategy if at least: the SoC of the energy storage unit is within a first predefined range, and the speeding condition indicates at least one of the acceleration condition and the coasting condition of the vehicle. The power management controller is configured to restrict the power supply from the axle generator to the energy storage unit if the reserve charging strategy is selected.

Optionally, the battery management controller is configured to select the adaptive charging strategy if at least: the SoC of the energy storage unit is within a second predefined range, wherein the second predefined range is lower than the first predefined range, and the speeding condition indicates at least one of the acceleration condition and the coasting condition of the vehicle.

Optionally, the power management controller is configured to variably supply the power from the axle generator to the energy storage unit if the adaptive charging strategy is selected. The power management controller is configured to vary a torque associated with the axle generator based on the SoC of the energy storage unit to supply a variable power to the energy storage unit.

Optionally, the battery management controller is configured to select the critical charging strategy if at least: the SoC of the energy storage unit is within a third predefined range, wherein the third predefined range is lower than the second predefined range, and the speeding condition indicates at least one of the acceleration condition and the coasting condition of the vehicle. The power management controller is configured to allow a maximum power supply from the axle generator to the energy storage unit if the critical charging strategy is selected.

Optionally, the battery management controller is configured to allow power supply from the axle generator to the energy storage unit if at least: the SoC of the energy storage unit is less than 100%, and the speeding condition indicates at least one of the braking condition and the de-acceleration condition.

Optionally, the energy storage unit comprises at least one of a battery and a flow battery.

According to a second aspect of the invention a method of controlling power supply to an energy storage unit of a vehicle having a Transportation Refrigeration Unit (TRU) is disclosed. The method comprises monitoring a State of Charge (SoC) of the energy storage unit. Further, the method comprises determining at least one operational characteristic associated with the vehicle. The at least one operational characteristic is indicative of at least a speeding condition of the vehicle. The method comprises controlling, based on the monitored SoC and the determined operational characteristics, a power supply from an axle generator of the vehicle to the energy storage unit to charge the energy storage unit.

Optionally, controlling the power supply further comprises: selecting a charging strategy from a plurality of charging strategies to charge the energy storage unit based on the monitored SoC and the determined operational characteristic, and controlling, based on the selected charging strategy, the power supply from the axle generator to the energy storage unit.

Optionally, the speeding condition is indicative of at least one of an acceleration condition, a de-acceleration condition, a coasting condition, and a braking condition, and the plurality of charging strategies comprises at least a reserve charging strategy, an adaptive charging strategy, and a critical charging strategy.

Optionally, controlling, based on the selected charging strategy, the power supply from the axle generator to the energy storage unit further comprises: generating, by a battery management controller, an input associated with the selected charging strategy, receiving, by a power management controller, the generated input from the battery management controller, and controlling, by the power management controller, the power supply from the axle generator to the energy storage unit based on the received input from the battery management controller. The input is indicative of at least a charging rate and an amount of power to be supplied to the energy storage unit.

Optionally, the method comprises selecting, by the battery management controller, the reserve charging strategy if at least: the SoC of the energy storage unit is within a first predefined range, and the speeding condition indicates at least one of the acceleration condition and the coasting condition of the vehicle. In the reserve charging strategy, the power supply is restricted from the axle generator to the energy storage unit.

Optionally, the method comprises selecting, by the battery management controller, the adaptive charging strategy if at least: the SoC of the energy storage unit is within a second predefined range, wherein the second predefined range is lower than the first predefined range, and the speeding condition indicates at least one of the acceleration condition and the coasting condition of the vehicle. In the adaptive charging strategy, the power supplied from the axle generator to the energy storage unit is varied.

Optionally, the method comprises selecting, by the battery management controller, the critical charging strategy if at least: the SoC of the energy storage unit is within a third predefined range, wherein the third predefined range is lower than the second predefined range, and the speeding condition indicates at least one of the acceleration condition and the coasting condition of the vehicle. In the critical charging strategy, a maximum power is supplied from the axle generator to the energy storage unit.

Optionally, the method comprises allowing, by the battery management controller, power supply from the axle generator to the energy storage unit if at least: the SoC of the energy storage unit is less than 100%, and the speeding condition indicates at least one of the braking condition and the de-acceleration condition.

To further clarify the advantages and features of the methods, systems, and apparatuses/devices, a more particular description of the methods, systems, and apparatuses/devices will be rendered by reference to specific embodiments thereof, which are illustrated in the appended drawings. It is appreciated that these drawings depict only typical embodiments of the invention and are therefore not to be considered limiting of its scope, which is as defined by the appended claims. The invention will be described and explained with additional specificity and detail with the accompanying drawings.

### BRIEF DESCRIPTION OF THE DRAWINGS

These and other features, aspects, and advantages of the invention will become better understood when the following detailed description is read with reference to the accompanying drawings in which like characters represent like parts throughout the drawings. Certain exemplary embodiments will now be described in greater detail by way of example only and with reference to the accompanying drawings in which:
Figure 1 illustrates a perspective view of a vehicle having a Transport Refrigeration Unit (TRU);
Figure 2 illustrates a block diagram of a power system deployed in the vehicle;
Figures 3a-3d illustrate an operation of a charging system of the power system to supply power to an energy storage unit of a power system;
Figure 4 illustrates an exemplary graph depicting SoC of an energy storage unit and a corresponding torque associated with an axle generator for charging the energy storage unit; and
Figure 5 illustrates a flowchart depicting a method for controlling power supply to an energy storage unit of a vehicle.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the invention. Furthermore, in terms of the construction of the device, one or more components of the device may have been represented in the drawings by conventional symbols, and the drawings may show only those specific details that are pertinent to understanding the embodiments of the invention so as not to obscure the drawings with details that will be readily apparent to those of ordinary skill in the art having the benefit of the description herein.

### DETAILED DESCRIPTION OF FIGURES

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system and device, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the invention. Thus, appearances of the phrase "in an embodiment", "in another embodiment", "some embodiments", "one or more embodiments" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

The term "unit" used herein may imply a unit including, for example, one of hardware, software, and firmware or a combination of two or more of them. The "unit" may be interchangeably used with a term such as logic, a logical block, a component, a circuit, and the like. The "unit" may be a minimum system component for performing one or more functions or may be a part thereof.

Embodiments of the invention will be described below in detail with reference to the accompanying drawings.

Usually, in vehicles with a Transport Refrigeration Unit (TRU), the electric power source is charged when the power from the fuel-based power source is available and a State of Charge (SoC) of the electric power source is less than 100%. Further, if the fuel-based power source is available, then the refrigeration unit is powered by the fuel-based power source irrespective of the SoC of the electric power source. For instance, the fuel-based power source is preferred over the electric power source even if the SoC of the electric power source is sufficiently available to supply power to the refrigeration unit. Therefore, such a charging and powering strategy results in limited use of the electric power source or green energy from the electric power source to supply power to the refrigeration unit. Further, a prolonged operation with nearly 100% SoC of the electric power source, such as a battery, reduces the potential of capturing green regenerative braking energy. Further, the aforementioned charging strategy also worsens battery capacity loss and accelerates aging of the electric power source.

The invention provides a power system for a vehicle and a method for controlling the power supply to an energy storage unit, such as an electric power source, of the power system. The power system may include a charging system capable of selecting different charging strategies based on the SoC of the energy storage unit and a speeding condition, such as acceleration, de-acceleration, coasting, and braking, of the vehicle. Further, based on the selected charging strategy, the electric storage unit may be charged by using power from a fuel-based power source, such as an axle generator. Implementation of different charging strategies helps in increasing the utilization of the electric storage unit and minimizing fuel consumption while charging the electric storage unit.

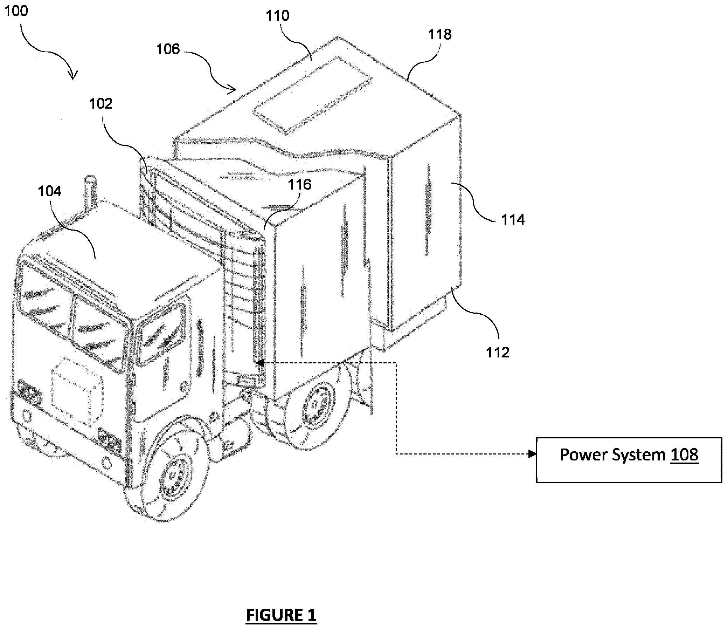

Figure 1 illustrates a perspective view of a vehicle 100 having a Transport Refrigeration Unit (TRU) 102, according to one or more embodiments of the invention. In one embodiment, the vehicle 100 may be embodied as a fuel-based vehicle having a combustion engine which may be part of a powertrain or a drive system of such vehicle. In another embodiment, the vehicle 100 may be embodied as an electric vehicle having electric motors to provide propulsive force for traversing such vehicle. In yet another embodiment, the vehicle 100 may be embodied as a hybrid vehicle having a combination of a combustion engine and one or more electric motors.

Referring to Figure 1, the vehicle 100 may include an operator's cabin 104, a container 106, the TRU 102, and a power system 108. The operator's cabin 104 may be located at a front of the vehicle 100 and coupled to the container 106. In an embodiment, the container 106 may be pulled by the vehicle 100. It is understood that embodiments described herein may be applied to shipping containers that are shipped by rail, sea, air, or any other suitable container, thus the vehicle 100 may be a truck, train, boat, airplane, helicopter, etc. The container 106 may be coupled to the vehicle 100 and is thus pulled or propelled to desired destinations.

In an embodiment, the container 106 may include a top wall 110, a bottom wall 112 opposed to and spaced from the top wall 110, a pair of side walls 114 spaced from and opposed to one another, and front and rear walls 116, 118 spaced from and opposed to one another. The front wall 116 may be closest to the vehicle 100. The container 106 may further include doors (not shown) at the rear wall 118, or any other wall. The walls 110, 112, 114, 116, 118 may together define the boundaries of a cargo compartment within the container 106.

In one or more embodiments, the vehicle 100 may be used to transport and distribute cargo, such as perishable goods and environmentally sensitive goods, herein referred to as perishable goods. The perishable goods may include, but are not limited to, fruits, vegetables, grains, beans, nuts, eggs, dairy, seed, flowers, meat, poultry, fish, ice, blood, pharmaceuticals, and any other suitable cargo requiring cold chain transport.

In the illustrated embodiment, the TRU 102 may be coupled to the container 106 and positioned on the front wall 116 of the container 106. The TRU 102 may be adapted to provide desired environmental parameters, such as temperature, pressure, humidity, carbon dioxide, ethylene, ozone, light exposure, vibration exposure, and other conditions to the cargo compartment of the container 106. In one or more embodiments, the TRU 102 may be embodied as a refrigeration system capable of providing a desired temperature range and a humidity range. Although, in the illustrated embodiment, the implementation of the power system 108 is explained with respect to the vehicle 100 with the TRU 102. It should not be construed as limiting, and the power system 108 can also be implemented in the vehicle 100 without the TRU 102 and having at least one electric power source.

In one or more embodiments, the TRU 102 may include, but is not limited to, a compressor, an electric compressor motor, a condenser that may be air cooled, a condenser fan assembly, a receiver, a filter dryer, a heat exchanger, an expansion valve, an evaporator, an evaporator fan assembly, a suction modulation valve, and a controller that may include a computer-based processor ( e.g., microprocessor). Referring to Figure 1, the TRU 102 may be in communication with the power system 108 of the vehicle 100. The power system 108 may be configured to supply power for operating the TRU 102 or at least the aforementioned components of the TRU 102.

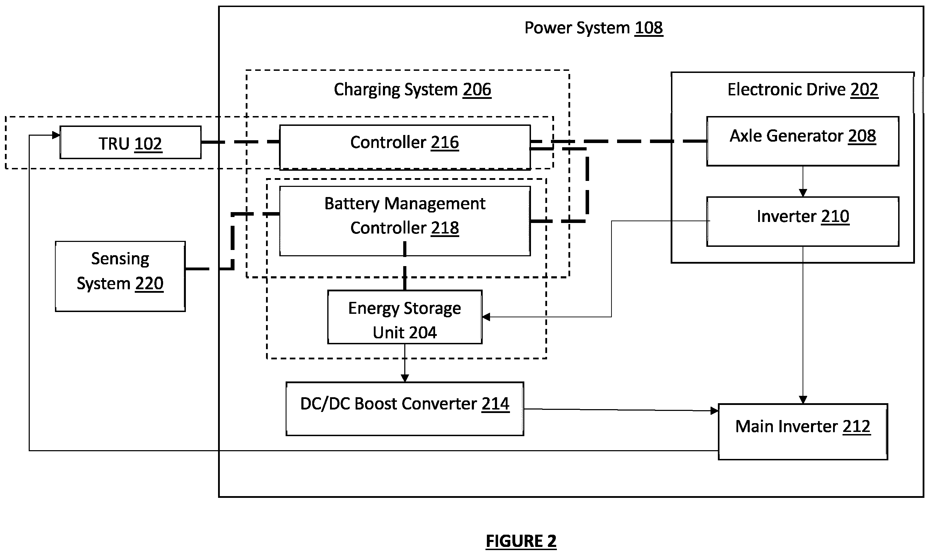

Constructional and operational details of the power system 108 are explained in detail with respect to Figures 2-7.

**Figure** 2 illustrates a block diagram of the power system 108 deployed in the vehicle 100, according to one or more embodiments of the invention. In the illustrated embodiment, the power system 108 may include, but is not limited to, an electronic drive 202, an energy storage unit 204, and a charging system 206. The electronic drive 202, the energy storage unit 204, and the charging system 206 may be in communication with each other and with the TRU 102. As mentioned earlier, the power system 108 may be configured to supply power to the TRU 102. In one or more embodiments, the electronic drive 202 and the energy storage unit 204 may be configured to selectively supply power to the TRU 102.

In the illustrated embodiment, the electronic drive 202 may include, but is not limited to, an axle generator 208 and an inverter 210. The axle generator 208 may be in communication with the energy storage unit 204 and may be adapted to supply power to at least one of the energy storage unit 204 and the TRU 102. The axle generator 208 may be mounted on an axle or a hub of the vehicle 100. The axle generator 208 may be configured to recover rotational energy from the axle or the hub when the vehicle 100 is in motion. For instance, the axle generator 208 may be configured to recover the rotational energy when the axle of the vehicle 100 is rotating due to acceleration, de-acceleration, coasting, or braking. Further, the axle generator 208 may be configured to convert the recovered rotational energy into electrical energy, herein referred to as the power.

In the illustrated embodiment, the axle generator 208 may be embodied as an Alternate Current (AC) generator configured to convert the rotational energy into the AC power. The axle generator 208 may be asynchronous or synchronous. In such an embodiment, the inverter 210 may be in communication with the axle generator 208 and configured to receive the AC power from the axle generator 208. The inverter 210 may be configured to convert the AC power into the Direct Current (DC) power. In one or more embodiments, the inverter 210 of the electronic drive 202 may include, but is not limited to, a voltage control function, a current control function, and a frequency converter. In one or more embodiments, the axle generator 208 may be embodied as a DC generator, without departing from the scope of the invention.

Further, a main inverter 212 may be deployed to convert the DC power from the electronic drive 202 into AC power. In one or more embodiments, the main inverter 212 may be a standalone unit or integral with the TRU 102. In the illustrated embodiment, the power system 108 may include the main inverter 212 and is electrically coupled to the TRU 102 and the inverter 210 of the electronic drive 202. The main inverter 212 may be configured to convert the DC power received from the inverter 210 of the electronic drive 202 into the AC power. Subsequently, the main inverter 212 may be configured to supply the converted AC power to the TRU 102.

Referring to Figure 2, the energy storage unit 204 may be in communication with the charging system 206 and electrically coupled to the electronic drive 202. Further, the energy storage unit 204 may be electrically coupled to the TRU 102 and adapted to supply power to the TRU 102. In one or more embodiments, the energy storage unit 204 may include at least one of a battery and a flow battery. The energy storage unit 204 may be configured to receive power from the electronic drive 202. In particular, the energy storage unit 204 may be charged by the electronic drive 202 and store energy which is to be selectively supplied to the TRU 102. In the illustrated embodiment, the energy storage unit 204 may be electrically coupled to the main inverter 212 via a DC/DC boost converter 214. The DC/DC boost converter 214 may be configured to regulate the output voltage of the energy storage unit 204. For instance, the DC/DC boost converter 214 may increase the output voltage of the energy storage unit 204.

As explained earlier, the charging system 206 may be in communication with the energy storage unit 204, the axle generator 208, and the TRU 102. In an embodiment, the charging system 206 may be configured to control a flow of power supply from the electronic drive 202 to the TRU 102 and the energy storage unit 204. Referring to Figure 2, in the illustrated embodiment, the charging system 206 may include, but is not limited to, a power management controller 216 and a battery management controller 218. The power management controller 216 may interchangeably be referred to as the controller 216, without departing from the scope of the invention. In one or more embodiments, the controller 216 may be embodied as a TRU controller or a standalone controller. The operational aspects of the charging system 206 may be explained with respect to the controller 216 being embodied as the TRU controller 216. However, it should not be construed as limiting and the controller 216 being embodied as the standalone controller can also be implemented in the charging system 206.

The TRU controller 216 may be in communication with the electronic drive 202, the TRU 102, and the battery management controller 218. In one or more embodiments, the communication between various components, such as the TRU controller 216, the electronic drive 202, the TRU 102, the energy storage unit 204, and the battery management controller 218, may be embodied as wireless communication or wired communication. The aforesaid components may communicate with each other via communication interfaces including, but not limited to, Controller Area Network (CAN), without departing from the scope of the invention.

In one or more embodiments, each of the TRU controller 216 and the battery management controller 218 may include a processor, memory, modules, and data. The modules and the memory are coupled to the processor. The processor can be a single processing unit or a number of units, all of which could include multiple computing units. The processor may be implemented as one or more microprocessors, microcomputers, microcontrollers, digital signal processors, central processing units, state machines, logic circuitries, and/or any devices that manipulate signals based on operational instructions. Among other capabilities, the processor is configured to fetch and execute computer-readable instructions and data stored in the memory.

The memory may include any non-transitory computer-readable medium known in the art including, for example, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes.

The modules, amongst other things, include routines, programs, objects, components, data structures, etc., which perform particular tasks or implement data types. The modules may also be implemented as, signal processor(s), state machine(s), logic circuitries, and/or any other device or component that manipulate signals based on operational instructions.

Further, the modules can be implemented in hardware, instructions executed by a processing unit, or by a combination thereof. The processing unit can comprise a computer, a processor, such as the processor, a state machine, a logic array, or any other suitable devices capable of processing instructions. The processing unit can be a general-purpose processor which executes instructions to cause the general-purpose processor to perform the required tasks or, the processing unit can be dedicated to perform the required functions. In another aspect of the invention, the modules may be machine-readable instructions (software) which, when executed by a processor/processing unit, perform any of the described functionalities.

In one or more embodiments, the TRU controller 216 may be a stand-alone unit or integral with the TRU 102, without departing from the scope of the invention. The TRU controller 216 may be configured to receive various inputs indicative of an operational state of the TRU 102 and determine a power requirement for the TRU 102. Based on the power requirements, the TRU controller 216 may be configured to direct the power supply from the electronic drive 202 to the TRU 102. In one or more embodiments, the TRU controller 216 may be in communication with a plurality of sensors, such as temperature sensors, of the TRU 102 and, may be configured to estimate the power requirement of the TRU 102 based on the inputs received from the plurality of sensors of the TRU 102. Based on the estimated power requirement, the TRU controller 216 may be configured to direct the power supply from the electronic drive 202 to the TRU 102. Further, the TRU controller 216 may be configured to receive inputs indicative of an operational state of the energy storage unit 204 and accordingly, configured to direct at least a portion of the power supply from the electronic drive 202 to the energy storage unit 204 for charging the energy storage unit 204.

In one or more embodiments, based on the power requirement, the TRU controller 216 may determine whether only the axle generator 208 can satisfy the power requirement of the TRU 102. If the axle generator 208 can satisfy the power requirement of the TRU 102, then the remaining power may be used to charge the energy storage unit 204 as explained in the subsequent sections of the specification. Further, if the axle generator 208 can only partially satisfy the power requirement of the TRU 102, then the remaining power is supplied to the TRU 102 from the energy storage unit 204. Furthermore, if the axle generator 208 fails to satisfy the power requirement of the TRU 102, then the power requirement of the TRU 102 may be satisfied by the energy storage unit 204.

In one or more embodiments, the charging system 206 may be configured to monitor a State of Charge (SoC) of the energy storage unit 204. Further, the charging system 206 may be configured to determine at least one operational characteristic associated with the vehicle 100. The charging system 206 may be configured to control, based on the monitored SoC and the determined operational characteristics, a power supply from the axle generator 208 to the energy storage unit 204. Constructional and operational details of the charging system 206 are explained in detail in the subsequent sections of the specification.

As mentioned earlier, the charging system 206 may include the battery management controller 218 in communication with the TRU controller 216 and the energy storage unit 204. In one or more embodiments, the battery management controller 218 may be a stand-alone unit or integral with the energy storage unit 204. The battery management controller 218 may be configured to determine parameters associated with the operational state of the energy storage unit 204. In an embodiment, the battery management controller 218 may be configured to monitor the SoC of the energy storage unit 204.

Further, the battery management controller 218 may be configured to determine the at least one operational characteristic associated with the vehicle 100. The at least one operational characteristic may be indicative of at least a speeding condition of the vehicle 100. In one or more embodiments, the speeding condition may be indicative of at least one of an acceleration condition, a de-acceleration condition, a coasting condition, and a braking condition. In one or more embodiments, the battery management controller 218 may be in communication with a sensing system 220 of the vehicle 100. In such an embodiment, the battery management controller 218 may be configured to receive inputs indicative of at least the speeding condition of the vehicle 100. In one or more examples, the inputs may include data associated with vehicle speed, clutch switch, brake switch, cruise control, accelerator pedal position, wheel rotational speed, a speed of the axle generator 208, and engine speed. The sensing system 220 may include, but is not limited to, an accelerometer, a Fleet Management System (FMS), and/or an Electronic Braking System (EBS), without departing from the scope of the invention.

As mentioned earlier, based on the monitored SoC and the determined operational characteristics, the charging system 206 may be configured to control the power supply from the axle generator 208 to the energy storage unit 204. In one or more embodiments, the battery management system 218 may be configured to select a charging strategy from a plurality of charging strategies to charge the energy storage unit 204 based on the monitored SoC and the determined operational characteristic. In one or more embodiments, the plurality of charging strategies may comprise at least a reserve charging strategy, an adaptive charging strategy, and a critical charging strategy. In one embodiment, data associated with the plurality of charging strategies may be stored in the memory of the battery management controller 218. In another embodiment, data associated with the plurality of charging strategies may be stored in a remote server, such as a cloud server, in communication with the battery management controller 218. The data associated with each of the plurality of charging strategies may be indicative of a charging rate and an amount of power to be supplied to the energy storage unit 204.

Further, the charging system 206 may be configured to control, based on the selected charging strategy, the power supply from the axle generator 208 to the energy storage unit 204. In an embodiment, the TRU controller 216 may be configured to control the power supply to the energy storage unit 204 based on the selected charging strategy. In one or more embodiments, the battery management controller 218 may be configured to generate an input associated with the selected charging strategy. The input may be indicative of at least the charging rate and the amount of power to be supplied to the energy storage unit 204.

Further, the TRU controller 216 may be configured to receive the generated input from the battery management controller 218. Thereafter, the TRU controller 216 may be configured to control the power supply from the axle generator 208 to the energy storage unit 204 based on the received input from the battery management controller 218. For instance, based on the generated input received from the battery management controller 218, the TRU controller 216 may be configured to regulate at least the voltage control function, the current control function, and the frequency converter of the inverter 210 of the electronic drive 202 in order to control the power supply from the axle generator 208 to the energy storage unit 204.

In one or more embodiments, the TRU controller 216 may be configured to prioritize the supply of power to the TRU 102 over the supply of power to the energy storage unit 204. For instance, the TRU controller 216 may be configured to determine whether the TRU 102 is operational, and if the TRU 102 is operational then primarily the power may be supplied from the electronic drive 202 to the TRU 102. Thereafter, the TRU controller 216 may be configured to control the supply of remaining power from the electronic drive 202 to the energy storage unit 204 based on the selected charging strategy. Therefore, in such embodiments, the TRU controller 216 may be configured to prioritize satisfying the power requirement of the TRU 102 and secondarily satisfy the charging requirement of the energy storage unit 204. However, it should not be construed as limiting, and the TRU 102 can also be configured for prioritizing the charging of the energy storage unit 204 over supplying the power to the TRU 102, without departing from the scope of the invention.

In one or more embodiments, a power grid (not shown) may be employed as a power source in addition to the electronic drive 202 and the energy storage unit 204. In such embodiments, the power grid may be electrically connected to the energy storage unit 204 and the TRU 102, when the vehicle 100 is in idle condition, such as parked condition. In one embodiment, the TRU controller 216 may be configured to control the flow of power to the TRU 102 based on the power requirement of the TRU 102, and the remaining power may be supplied to the energy storage unit 204 based on the SoC thereof. For instance, if the TRU 102 is operational and the power grid is connected, then the TRU controller 216 may control the flow of power to the TRU 102 to satisfy the power requirement. Thereafter, based on the monitored SoC received from the battery management controller 218, the TRU controller 216 may control the flow of remaining power to the energy storage unit 204. For example, if the SoC is less than 100%, then the energy storage unit 204 may be charged using the remaining power from the power grid.

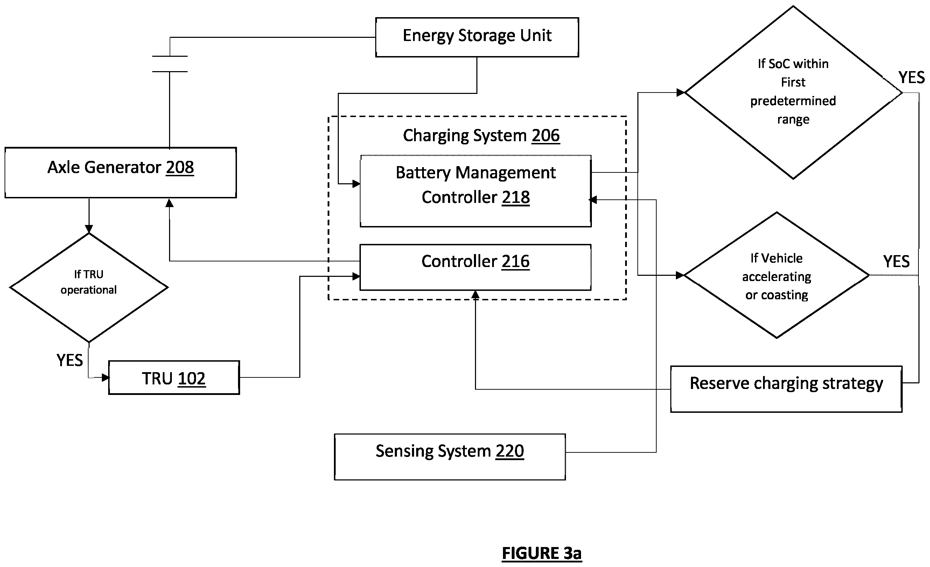

Operational details of the power system 108 with respect to each charging strategy are explained in detail in the subsequent sections with respect to Figures 3a-3d.

**Figures 3a-3d** illustrate an operation of the charging system 206 of the power system 108 to supply power to the energy storage unit 204 of the power system 108, according to one or more embodiments of the invention. In one or more embodiments, the battery management controller 218 may be configured to select the reserve charging strategy if at least the SoC of the energy storage unit 204 is within a first predefined range, and the speeding condition indicates at least one of the acceleration condition and the coasting condition of the vehicle 100.

Referring to Figure 3a, the battery management controller 218 may be configured to monitor the SoC of the energy storage unit 204. Based on the monitored SoC, the battery management controller 218 may be configured to determine whether the SoC is within the first predetermined range. In an example, the first predetermined range may be 80 % SoC -100 % SoC, without departing from the scope of the invention. In one or more embodiments, the first predetermined range can be varied based on various factors, such as a capacity of the energy storage unit 204 and based on user requirements/applications. Therefore, it should not be construed as limiting, and the first predetermined range may be embodied as any range other than 80% SoC - 100% SoC, without departing from the scope of the invention. In one example, if an application demands the vehicle 100 to cruise at low speeds, then the first predefined range can be reduced to 90 % SoC- 100 % SoC. In another example, if an application demands the vehicle 100 to cruise at higher speeds, then the first predefined range can be increased to 70 % SoC - 100 % SoC.

Further, the battery management controller 218 may be configured to receive an input, from the sensing system 220. The input may be associated with the at least one operational characteristic indicative of the speeding condition, such as the acceleration condition, the coasting condition, the de-acceleration condition, and the braking condition. Referring to Figure 3a, based on the input from the sensing system 220, the battery management controller 218 may determine whether the speeding condition is one of the acceleration condition and the coasting condition.

Now, if the monitored SoC of the energy storage unit 204 is within the first predefined range and the speeding condition is determined as one of the acceleration condition and the coasting condition, then the battery management controller 218 may select the reserve charging strategy from the plurality of charging strategies. Subsequently, the battery management controller 218 may generate an input associated with the reserve charging strategy. The input may be indicative of at least a charging rate and an amount of power to be supplied to the energy storage unit 204. In the reserve charging strategy, the charging rate and the amount of power to be supplied from the electronic drive 202 may be substantially equal to zero. In particular, in the reserve charging strategy, the power may not be supplied to the energy storage unit 204 from the axle generator 208.

Further, the TRU controller 216 may receive the generated input indicative of the reserve charging strategy from the battery management controller 218. The TRU controller 216 may be configured to restrict the power supply from the axle generator 208 to the energy storage unit 204 if the reserve charging strategy is selected. In one or more embodiments, the TRU controller 216 may determine whether the TRU 102 is operational. If the TRU 102 is operational, then the TRU controller 216 may determine the power requirement of the TRU 102. Now, based on the power requirement of the TRU 102, the TRU controller 216 may direct the power supply from the axle generator 208 to the TRU 102. Further, in one or more embodiments, the TRU controller 216 may be configured to determine whether the grid power, such as a shore-based power source, is connected to the vehicle 100. The shore-based power source may be referred to a power source that is connected to the vehicle 100 in a parked condition. If the grid power is connected, then TRU controller 216 may direct the power supply primarily from the grid power to the TRU 102 based on the power requirement of the TRU 102. Subsequently, the TRU controller 216 may direct the remaining power from the grid power for charging the energy storage unit 204 in the reverse charging strategy.

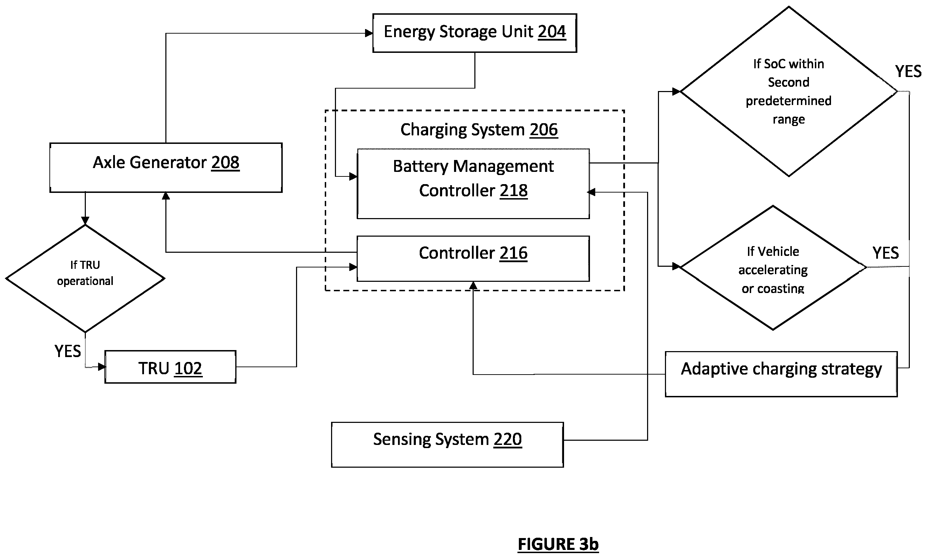

Referring to Figure 3b, the battery management controller 218 may be configured to monitor the SoC of the energy storage unit 204. Based on the monitored SoC, the battery management controller 218 may be configured to determine whether the SoC is within the second predetermined range. The second predefined range may be lower than the first predefined range. In an example, the second predetermined range may be 60% SoC - 80% SoC, without departing from the scope of the invention. In one or more embodiments, the second predetermined range can be varied based on various factors, such as a capacity of the energy storage unit and based on user requirements/applications. Therefore, it should not be construed as limiting, and the second predetermined range may be embodied as any range other than 60% SoC - 80% SoC, without departing from the scope of the invention.

Further, the battery management controller 218 may be configured to receive an input, from the sensing system 220. The input may be associated with the at least one operational characteristic indicative of the speeding condition, such as the acceleration condition, the coasting condition, the de-acceleration condition, and the braking condition. Referring to Figure 3b, based on the input from the sensing system 220, the battery management controller 218 may determine whether the speeding condition is one of the acceleration condition and the coasting condition.

Now, if the monitored SoC of the energy storage unit 204 is within the second predefined range and the speeding condition is determined as one of the acceleration condition and the coasting condition, then the battery management controller 218 may select the adaptive charging strategy from the plurality of charging strategies. Subsequently, the battery management controller 218 may generate an input associated with the adaptive charging strategy. The input may be indicative of at least a charging rate and an amount of power to be supplied to the energy storage unit 204. In the adaptive charging strategy, the charging rate and the amount of power to be supplied from the electronic drive 202 may vary based on a variation in SoC of the energy storage unit 204 between the second predetermined range. In particular, in the adaptive charging strategy, the power supply from the axle generator 208 may gradually increase with the reduction in SoC of the energy storage unit 204 and gradually decrease with the increase in SoC of the energy storage unit 204.

Further, the TRU controller 216 may receive the generated input indicative of the adaptive charging strategy from the battery management controller 218. In one or more embodiments, the TRU controller 216 may be configured to variably supply the power from the axle generator 208 to the energy storage unit 204 if the adaptive charging strategy is selected. The TRU controller 216 may be configured to vary a torque associated with the axle generator 208 based on the SoC of the energy storage unit 204 to supply a variable power to the energy storage unit 204. In one or more embodiments, based on the SoC of the energy storage unit 204, the TRU controller 216 may be configured to regulate at least the voltage control function, the current control function, and the frequency converter of the inverter 210 of the electronic drive 202 in order to vary the power supply from the axle generator 208 to the energy storage unit 204. For instance, the TRU controller 216 may vary the torque associated with the axle generator 208 by regulating at least the voltage control function, the current control function, and the frequency converter to vary the power supply to the energy storage unit 204.

In one or more embodiments, the TRU controller 216 may determine whether the TRU 102 is operational. If the TRU 102 is operational, then the TRU controller 216 may determine the power requirement of the TRU 102. Now, based on the power requirement of the TRU 102, the TRU controller 216 may direct the power supply from the axle generator 208 to the TRU 102. Subsequently, upon satisfying the power requirement of the TRU 102, the TRU controller 216 may vary and direct the remaining power for the charging the energy storage unit 204 based on the SoC of the energy storage unit 204 in the adaptive charging strategy.

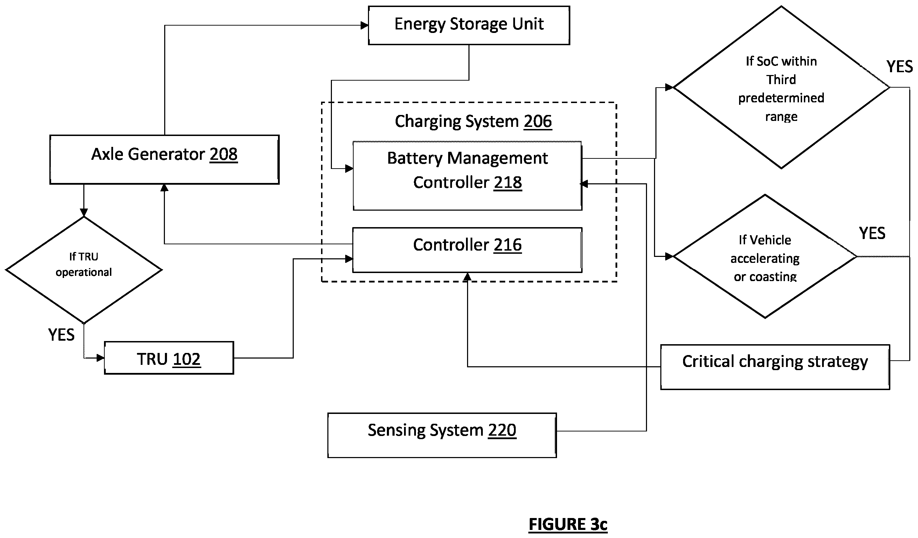

Referring to Figure 3c, the battery management controller 218 may be configured to monitor the SoC of the energy storage unit 204. Based on the monitored SoC, the battery management controller 218 may be configured to determine whether the SoC is within the third predetermined range. The third predefined range may be lower than the second predefined range. In an example, the third predetermined range may be 20% SoC - 60% SoC, without departing from the scope of the invention. In one or more embodiments, the third predetermined range can be varied based on various factors, such as a capacity of the energy storage unit 204 and based on user requirements/applications. Therefore, it should not be construed as limiting, and the third predetermined range may be embodied as any range other than 20% SoC - 60% SoC, without departing from the scope of the invention.

Further, the battery management controller 218 may be configured to receive an input, from the sensing system 220. The input may be associated with the at least one operational characteristic indicative of the speeding condition, such as the acceleration condition, the coasting condition, the de-acceleration condition, and the braking condition. Referring to Figure 3c, based on the input from the sensing system 220, the battery management controller 218 may determine whether the speeding condition is one of the acceleration condition and the coasting condition.

Now, if the monitored SoC of the energy storage unit 204 is within the third predefined range and the speeding condition is determined as one of the acceleration condition and the coasting condition, then the battery management controller 218 may select the critical charging strategy from the plurality of charging strategies. Subsequently, the battery management controller 218 may generate an input associated with the critical charging strategy. The input may be indicative of at least a charging rate and an amount of power to be supplied to the energy storage unit 204. In the critical charging strategy, the charging rate and the amount of power to be supplied from the electronic drive 202 may be substantially equal to a maximum charging rate and a maximum amount of power to be supplied. In particular, in the critical charging strategy, the power supply from the axle generator 208 may be embodied as a maximum power supply.

Further, the TRU controller 216 may receive the generated input indicative of the critical charging strategy from the battery management controller 218. In one or more embodiments, the TRU controller 216 may be configured to allow a maximum power supply from the axle generator 208 to the energy storage unit 204 if the critical charging strategy is selected. The TRU controller 216 may be configured to maximize a torque associated with the axle generator 208 to supply maximum power to the energy storage unit 204. In one or more embodiments, the TRU controller 216 may be configured to regulate at least the voltage control function, the current control function, and the frequency converter of the inverter 210 of the electronic drive 202 in order to maximize the power supply from the axle generator 208 to the energy storage unit 204. For instance, the TRU controller 216 may maximize the torque associated with the axle generator 208 by regulating at least the voltage control function, the current control function, and the frequency converter to maximize the power supply to the energy storage unit 204.

In one or more embodiments, the TRU controller 216 may determine whether the TRU 102 is operational. If the TRU 102 is operational, then the TRU controller 216 may determine the power requirement of the TRU 102. Now, based on the power requirement of the TRU 102, the TRU controller 216 may direct the maximum power supply from the axle generator 208 to the TRU 102. Subsequently, upon satisfying the power requirement of the TRU 102, the TRU controller 216 may direct the maximum power supply for the charging the energy storage unit 204 in the critical charging strategy.

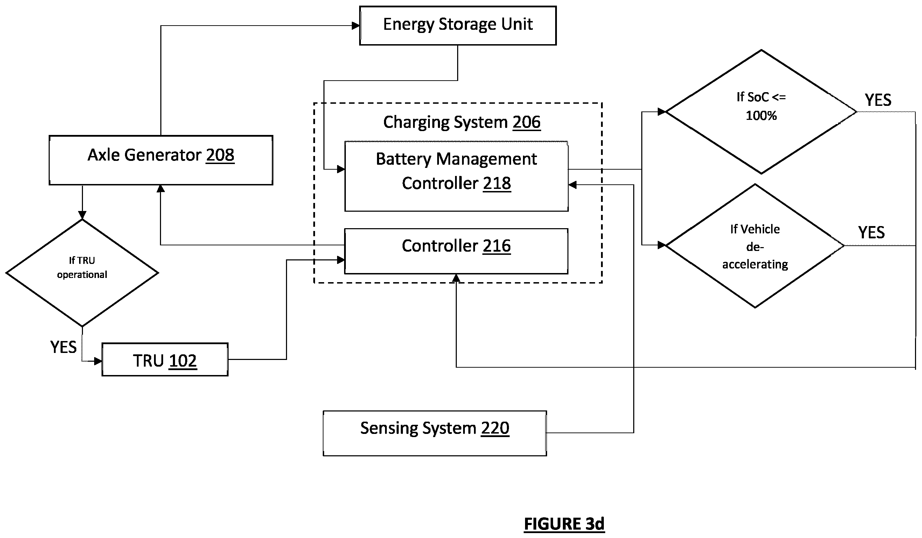

Referring to Figure 3d, the battery management controller 218 may be configured to monitor the SoC of the energy storage unit 204. Based on the monitored SoC, the battery management controller 218 may be configured to determine whether the SoC is less than 100%. Further, the battery management controller 218 may be configured to receive an input, from the sensing system 220. The input may be associated with the at least one operational characteristic indicative of the speeding condition, such as the acceleration condition, the coasting condition, the de-acceleration condition, and the braking condition. Referring to Figure 3d, based on the input from the sensing system 220, the battery management controller 218 may determine whether the speeding condition is one of the de-acceleration condition and the braking condition.

Now, if the monitored SoC of the energy storage unit 204 is less than 100% and the speeding condition is determined as one of the de-acceleration condition and the braking condition, then the battery management controller 218 may allow power supply from the axle generator 208 to the energy storage unit 204. In particular, the TRU controller 216 may divert the maximum power from the axle generator 208 to the energy storage unit 204, when the SoC is less than 100% and the speeding condition is determined as one of the de-acceleration condition and the braking condition. The charging rate and the amount of power to be supplied from the axle generator 208 to the energy storage unit 204 may be substantially equal to a maximum charging rate and a maximum amount of power.

In one or more embodiments, the TRU controller 216 may determine whether the TRU 102 is operational. If the TRU 102 is operational, then the TRU controller 216 may determine the power requirement of the TRU 102. Now, based on the power requirement of the TRU 102, the TRU controller 216 may direct the maximum power supply from the axle generator 208 to the TRU 102, if the speeding condition is determined as one of the de-acceleration and the braking condition. Subsequently, upon satisfying the power requirement of the TRU 102, the TRU controller 216 may direct the maximum power supply for the charging the energy storage unit 204, if the SoC is less than 100% and the speeding condition is one of the de-acceleration and the braking condition.

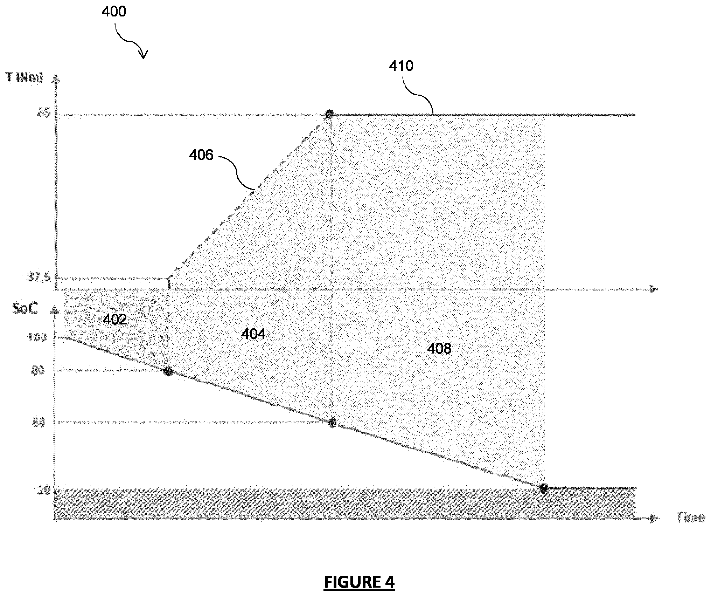

**Figure** 4 illustrates an exemplary graph 400 depicting SoC of the energy storage unit and the corresponding torque associated with the axle generator 208 for charging the energy storage unit 204, according to one or more embodiments of the invention. Referring to Figure 4, the SoC range of 100% - 80% indicates the first predetermined range 402. As explained earlier, if the vehicle 100 is moving, i.e., accelerating or coasting, and the SoC is within the first predetermined range, then the energy storage unit 204 may not be charged using the power supply from the axle generator 208.

Further, the SoC range of 80% - 60% indicates the second predetermined range 404. As explained earlier, if the vehicle 100 is moving, i.e., accelerating or coasting, and the SoC is within the second predetermined range, then the energy storage unit 204 may be charged using the power supply from the axle generator 208. In particular, the TRU controller 216 may vary the power supply by varying the torque associated with the axle generator 208 based on the SoC of the energy storage unit 204. For instance, referring to curve 406, the TRU controller 216 may gradually decrease the torque with the increase in the SoC of the energy storage unit 204. In particular, when the SoC of the energy storage unit 204 is 60%, the TRU controller 216 may maximize the torque associated with the axle generator 208 to supply the power for charging the energy storage unit 204. Subsequently, when the SoC of the energy storage unit 204 increases to 70%, the TRU controller 216 may gradually decrease the torque to supply lesser power, to the energy storage unit 204, compared to the power supplied when the SoC equals to 60%.

Furthermore, the SoC range of 60% - 20% indicates the third predetermined range 408. As explained earlier, if the vehicle 100 is moving, i.e., accelerating or coasting, and the SoC is within the third predetermined range, then the energy storage unit 204 may be charged using the maximum power supply from the axle generator 208. Referring to curve 410, the TRU controller 216 may maximize the torque, such as 86Nm, associated with the axle generator 208 to supply the maximum power to the energy storage unit 204, when the SoC of the energy storage unit 204 is between 60% - 20%. The TRU controller 216 may maintain the maximum torque associated with the axle generator 208, when SoC is within the range of 20% - 60%. It should be understood that the values of the SoC range and the torque mentioned in the specification and illustrated in Figure 4 are exemplary in nature and should not be construed as limiting.

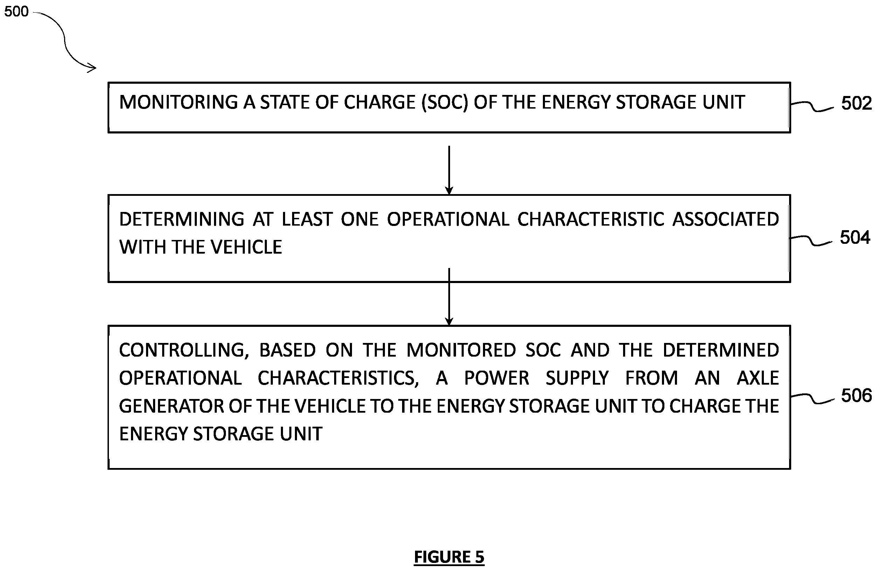

**Figure** 5 illustrates a flowchart depicting a method 500 for controlling power supply to the energy storage unit 204 of the power system 108, according to one or more embodiments of the invention. At step 502, the method 500 includes monitoring a State of Charge (SoC) of the energy storage unit 204. At step 504, the method 500 includes determining at least one operational characteristic associated with the vehicle 100. The at least one operational characteristic may be indicative of at least a speeding condition of the vehicle 100.

At step 506, the method 500 includes controlling, based on the monitored SoC and the determined operational characteristics, a power supply from the axle generator 208 of the vehicle 100 to the energy storage unit 204 to charge the energy storage unit 204. In one or more embodiments, to control the power supply, the method 500 may include selecting a charging strategy from a plurality of charging strategies to charge the energy storage unit 204 based on the monitored SoC and the determined operational characteristic. Further, the method 500 may include controlling, based on the selected charging strategy, the power supply from the axle generator 208 to the energy storage unit 204.

In one or more embodiments, to control, based on the selected charging strategy, the power supply, the method 500 may include generating, by the battery management controller 218, the input associated with the selected charging strategy. Further, the method 500 may include receiving, by the TRU controller 216, the generated input from the battery management controller 218. Furthermore, the method 500 may include controlling, by the TRU controller 216, the power supply from the axle generator 208 to the energy storage unit 204 based on the received input from the battery management controller 218. The input may be indicative of at least the charging rate and the amount of power to be supplied to the energy storage unit 204.

In one or more embodiments, the method 500 may include selecting, by the battery management controller 218, the reserve charging strategy if at least the SoC of the energy storage unit 204 is within the first predefined range, and the speeding condition indicates at least one of the acceleration condition and the coasting condition of the vehicle 100. In the reserve charging strategy, the power supply may be restricted from the axle generator 208 to the energy storage unit 204.

In one or more embodiments, the method 500 may include selecting, by the battery management controller 218, the adaptive charging strategy if at least the SoC of the energy storage unit 204 is within the second predefined range, and the speeding condition indicates at least one of the acceleration condition and the coasting condition of the vehicle 100. In the adaptive charging strategy, the power supplied from the axle generator 208 to the energy storage unit 204 may be varied.

In one or more embodiments, the method 500 comprises selecting, by the battery management controller 218, the critical charging strategy if at least the SoC of the energy storage unit 204 is within the third predefined range, and the speeding condition indicates at least one of the acceleration condition and the coasting condition of the vehicle 100. In the critical charging strategy, the maximum power may be supplied from the axle generator 208 to the energy storage unit 204.

In one or more embodiments, the method 500 comprises allowing, by the battery management controller 218, power supply from the axle generator 208 to the energy storage unit 204 if at least the SoC of the energy storage unit 204 is less than 100%, and the speeding condition indicates at least one of the braking condition and the de-acceleration condition.

While the above steps of Figure 5 are shown and described in a particular sequence, the steps may occur in variations to the sequence in accordance with various embodiments of the invention. Further, the details related to various steps of Figure 5, which are already covered in the description related to Figures 1-4 are not discussed again in detail here for the sake of brevity.

As would be gathered, the invention offers the power system 108 and the method 500 of supplying power to the energy storage unit 204 of the power system 108. As explained earlier, the energy storage unit 204 may be charged using the power supply from the axle generator 208 based on the SoC of the energy storage unit 204 and the speeding condition of the vehicle 100. In particular, a charging strategy is selected from the plurality of charging strategies based on the SoC of the energy storage unit 204 and the speeding condition of the vehicle 100. Based on the charging strategies, the energy storage unit 204 is only charged when the SoC falls within the second and third predetermined ranges and if the vehicle 100 is moving. This substantially increases the utilization of the energy storage unit 204. Also, such charging strategies may eliminate the requirement of charging the energy storage unit 204 every time the SoC drops below 100%. The energy storage unit 204 is charged when the SoC is below 100% only if the vehicle 100 is in the de-acceleration or the braking condition. Therefore, this minimize the utilization of the axle generator 208 for charging the energy storage unit 204 and thereby, resulting in a substantial decrease in the overall fuel consumption and the fuel emissions.

While specific language has been used to describe the subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

The following numbered clauses set out embodiments of the invention which may or may not presently be claimed, but which may form the basis for future amendment or a divisional application.
1. A power system for a vehicle having a Transportation Refrigeration Unit (TRU), the power system comprising:
   an energy storage unit adapted to supply power to the TRU;
   an axle generator in communication with the energy storage unit and adapted to supply power to at least one of the energy storage unit and the TRU; and
   a charging system in communication with the energy storage unit, the axle generator, and the TRU, wherein the charging system is configured to:
      monitor a State of Charge (SoC) of the energy storage unit;
      determine at least one operational characteristic associated with the vehicle, wherein the at least one operational characteristic is indicative of at least a speeding condition of the vehicle; and
      control, based on the monitored SoC and the determined operational characteristics, a power supply from the axle generator to the energy storage unit.
2. The power system according to clause 1, wherein the speeding condition is indicative of at least one of an acceleration condition, a de-acceleration condition, a coasting condition, and a braking condition.
3. The power system according to clause 1, wherein to control the power supply, the charging system is configured to:
   select a charging strategy from a plurality of charging strategies to charge the energy storage unit based on the monitored SoC and the determined operational characteristic; and
   control, based on the selected charging strategy, the power supply from the axle generator to the energy storage unit.
4. The power system according to clause 3, wherein the plurality of charging strategies comprises at least a reserve charging strategy, an adaptive charging strategy, and a critical charging strategy.
5. The power system according to any of the preceding clauses, wherein the charging system comprises a battery management controller and a power management controller in communication with each other.
6. The power system according to any of the preceding clauses, wherein to control the power supply, based on the selected charging strategy, from the axle generator to the energy storage unit, the charging system is configured to:
   generate, by the battery management controller, an input associated with the selected charging strategy, wherein the input is indicative of at least a charging rate and an amount of power to be supplied to the energy storage unit;
   receive, by the power management controller, the generated input from the battery management controller; and
   control, by the power management controller, the power supply from the axle generator to the energy storage unit based on the received input from the battery management controller.
7. The power system according to any of the preceding clauses, wherein:
   the battery management controller is configured to select the reserve charging strategy if at least:
      the SoC of the energy storage unit is within a first predefined range, and
      the speeding condition indicates at least one of the acceleration condition and the coasting condition of the vehicle,
   wherein the power management controller is configured to restrict the power supply from the axle generator to the energy storage unit if the reserve charging strategy is selected.
8. The power system according to any of the preceding clauses, wherein:
   the battery management controller is configured to select the adaptive charging strategy if at least:
   the SoC of the energy storage unit is within a second predefined range, wherein the second predefined range is lower than the first predefined range, and
   the speeding condition indicates at least one of the acceleration condition and the coasting condition of the vehicle.
9. The power system according to any of the preceding clauses, wherein the power management controller is configured to variably supply the power from the axle generator to the energy storage unit if the adaptive charging strategy is selected, wherein the power management controller is configured to vary a torque associated with the axle generator based on the SoC of the energy storage unit to supply a variable power to the energy storage unit.
10. The power system according to any of the preceding clauses, wherein:
   the battery management controller is configured to select the critical charging strategy if at least:
      the SoC of the energy storage unit is within a third predefined range, wherein the third predefined range is lower than the second predefined range, and
      the speeding condition indicates at least one of the acceleration condition and the coasting condition of the vehicle,
   wherein the power management controller is configured to allow a maximum power supply from the axle generator to the energy storage unit if the critical charging strategy is selected.
11. The power system according to any of the preceding clauses, wherein the battery management controller is configured to allow power supply from the axle generator to the energy storage unit if at least:
   the SoC of the energy storage unit is less than 100%, and
   the speeding condition indicates at least one of the braking condition and the de-acceleration condition.
12. The power system according to clause 1, wherein the energy storage unit comprises at least one of a battery and a flow battery.
13. A method of controlling power supply to an energy storage unit of a vehicle having a Transportation Refrigeration Unit (TRU), the method comprising:
   monitoring a State of Charge (SoC) of the energy storage unit;
   determining at least one operational characteristic associated with the vehicle, wherein the at least one operational characteristic is indicative of at least a speeding condition of the vehicle; and
   controlling, based on the monitored SoC and the determined operational characteristics, a power supply from an axle generator of the vehicle to the energy storage unit to charge the energy storage unit.
14. The method according to clause 13, wherein controlling the power supply further comprises:
   selecting a charging strategy from a plurality of charging strategies to charge the energy storage unit based on the monitored SoC and the determined operational characteristic; and
   controlling, based on the selected charging strategy, the power supply from the axle generator to the energy storage unit.
15. The method according to any of clauses 13 and 14 wherein:
   the speeding condition is indicative of at least one of an acceleration condition, a de-acceleration condition, a coasting condition, and a braking condition; and
   the plurality of charging strategies comprises at least a reserve charging strategy, an adaptive charging strategy, and a critical charging strategy.
16. The method according to any of the clauses 14-15 wherein controlling, based on the selected charging strategy, the power supply from the axle generator to the energy storage unit further comprises:
   generating, by a battery management controller, an input associated with the selected charging strategy, wherein the input is indicative of at least a charging rate and an amount of power to be supplied to the energy storage unit;
   receiving, by a power management controller, the generated input from the battery management controller; and
   controlling, by the power management controller, the power supply from the axle generator to the energy storage unit based on the received input from the battery management controller.
17. The method according to any of the clauses 14-16 further comprising:
   selecting, by the battery management controller, the reserve charging strategy if at least:
      the SoC of the energy storage unit is within a first predefined range, and
      the speeding condition indicates at least one of the acceleration condition and the coasting condition of the vehicle,
   wherein in the reserve charging strategy, the power supply is restricted from the axle generator to the energy storage unit.
18. The method according to any of the clauses 14-17, further comprising:
   selecting, by the battery management controller, the adaptive charging strategy if at least:
      the SoC of the energy storage unit is within a second predefined range, wherein the second predefined range is lower than the first predefined range, and
      the speeding condition indicates at least one of the acceleration condition and the coasting condition of the vehicle,
   wherein, in the adaptive charging strategy, the power supplied from the axle generator to the energy storage unit is varied.
19. The method according to any of the clauses 14-18, further comprising:
   selecting, by the battery management controller, the critical charging strategy if at least:
      the SoC of the energy storage unit is within a third predefined range, wherein the third predefined range is lower than the second predefined range, and
      the speeding condition indicates at least one of the acceleration condition and the coasting condition of the vehicle,
   wherein, in the critical charging strategy, a maximum power is supplied from the axle generator to the energy storage unit.
20. The method according to any of the clauses 14-19 further comprising:
   allowing, by the battery management controller, power supply from the axle generator to the energy storage unit if at least:
   the SoC of the energy storage unit is less than 100%, and
   the speeding condition indicates at least one of the braking condition and the de-acceleration condition.

## Claims

1. A power system (108) for a vehicle (100) having a Transportation Refrigeration Unit, TRU, (102) the power system comprising:
an energy storage unit (204) adapted to supply power to the TRU;
an axle generator (208) in communication with the energy storage unit and adapted to supply power to at least one of the energy storage unit and the TRU; and
a charging system (206) in communication with the energy storage unit, the axle generator, and the TRU, wherein the charging system is configured to:
monitor a State of Charge, SoC, of the energy storage unit;
determine at least one operational characteristic associated with the vehicle, wherein the at least one operational characteristic is indicative of at least a speeding condition of the vehicle; and
control, based on the monitored SoC and the determined operational characteristics, a power supply from the axle generator to the energy storage unit;
wherein the charging system comprises a battery management controller (218) and a power management controller (216) in communication with each other.

2. The power system (108) according to claim 1, wherein the speeding condition is indicative of at least one of an acceleration condition, a de-acceleration condition, a coasting condition, and a braking condition.

3. The power system (108) according to claim 1 or 2, wherein to control the power supply, the charging system (206) is configured to:
select a charging strategy from a plurality of charging strategies to charge the energy storage unit (204) based on the monitored SoC and the determined operational characteristic; and
control, based on the selected charging strategy, the power supply from the axle generator (208) to the energy storage unit,
wherein the plurality of charging strategies comprises at least a reserve charging strategy, an adaptive charging strategy, and a critical charging strategy.

4. The power system (108) according to claim 3, wherein to control the power supply, based on the selected charging strategy, from the axle generator (208) to the energy storage unit (204), the charging system (206) is configured to:
generate, by the battery management controller (218), an input associated with the selected charging strategy, wherein the input is indicative of at least a charging rate and an amount of power to be supplied to the energy storage unit;
receive, by the power management controller (216), the generated input from the battery management controller; and
control, by the power management controller, the power supply from the axle generator to the energy storage unit based on the received input from the battery management controller.

5. The power system (108) according to claim 3 or 4, when dependent upon claim 2, wherein:
the battery management controller (218) is configured to select the reserve charging strategy if at least:
the SoC of the energy storage unit (204) is within a first predefined range (402), and
the speeding condition indicates at least one of the acceleration condition and the coasting condition of the vehicle (100),
wherein the power management controller (216) is configured to restrict the power supply from the axle generator (208) to the energy storage unit if the reserve charging strategy is selected.

6. The power system (108) according to claim 5, wherein:
the battery management controller (218) is configured to select the adaptive charging strategy if at least:
the SoC of the energy storage unit (204) is within a second predefined range (404), wherein the second predefined range is lower than the first predefined range (402), and
the speeding condition indicates at least one of the acceleration condition and the coasting condition of the vehicle (100).

7. The power system (108) according to claim 6, wherein:
the battery management controller (218) is configured to select the critical charging strategy if at least:
the SoC of the energy storage unit (204) is within a third predefined range (408), wherein the third predefined range is lower than the second predefined range (404), and
the speeding condition indicates at least one of the acceleration condition and the coasting condition of the vehicle (100),
wherein the power management controller (216) is configured to allow a maximum power supply from the axle generator (208) to the energy storage unit if the critical charging strategy is selected.

8. A method (500) of controlling power supply to an energy storage unit (204) of a vehicle (100) having a Transportation Refrigeration Unit, TRU, (102), a battery management controller (218), and a power management controller (216), wherein the battery management controller and the power management controller are in communication with each other; the method comprising:
monitoring (502) a State of Charge, SoC, of the energy storage unit;
determining (504) at least one operational characteristic associated with the vehicle, wherein the at least one operational characteristic is indicative of at least a speeding condition of the vehicle; and
controlling (506), based on the monitored SoC and the determined operational characteristics, a power supply from an axle generator (208) of the vehicle to the energy storage unit to charge the energy storage unit.

9. The method (500) according to claim 8, wherein controlling the power supply further comprises:
selecting a charging strategy from a plurality of charging strategies to charge the energy storage unit (204) based on the monitored SoC and the determined operational characteristic; and
controlling, based on the selected charging strategy, the power supply from the axle generator (208) to the energy storage unit.

10. The method (500) according to claim 9 wherein:
the speeding condition is indicative of at least one of an acceleration condition, a de-acceleration condition, a coasting condition, and a braking condition; and
the plurality of charging strategies comprises at least a reserve charging strategy, an adaptive charging strategy, and a critical charging strategy.

11. The method (500) according to claim 9 or 10 wherein controlling, based on the selected charging strategy, the power supply from the axle generator (208) to the energy storage unit (204) further comprises:
generating, by the battery management controller (218), an input associated with the selected charging strategy, wherein the input is indicative of at least a charging rate and an amount of power to be supplied to the energy storage unit;
receiving, by the power management controller (216), the generated input from the battery management controller; and
controlling, by the power management controller, the power supply from the axle generator to the energy storage unit based on the received input from the battery management controller.

12. The method (500) according to claim 11 when dependent upon claim 10, further comprising:
selecting, by the battery management controller (218), the reserve charging strategy if at least:
the SoC of the energy storage unit (204) is within a first predefined range (402), and
the speeding condition indicates at least one of the acceleration condition and the coasting condition of the vehicle (100),
wherein in the reserve charging strategy, the power supply is restricted from the axle generator (208) to the energy storage unit.

13. The method (500) according to claim 12, further comprising:
selecting, by the battery management controller (218), the adaptive charging strategy if at least:
the SoC of the energy storage unit (204) is within a second predefined range (404), wherein the second predefined range is lower than the first predefined range (402), and
the speeding condition indicates at least one of the acceleration condition and the coasting condition of the vehicle (100),
wherein, in the adaptive charging strategy, the power supplied from the axle generator (208) to the energy storage unit is varied.

14. The method (500) according to claim 13, further comprising:
selecting, by the battery management controller (218), the critical charging strategy if at least:
the SoC of the energy storage unit (204) is within a third predefined range (408), wherein the third predefined range is lower than the second predefined range (404), and
the speeding condition indicates at least one of the acceleration condition and the coasting condition of the vehicle (100),
wherein, in the critical charging strategy, a maximum power is supplied from the axle generator (208) to the energy storage unit.

15. The method (500) according to any of claims 12 to 14, or claim 11 when dependent upon claim 10, further comprising:
allowing, by the battery management controller (218), power supply from the axle generator (208) to the energy storage unit (204) if at least:
the SoC of the energy storage unit is less than 100%, and
the speeding condition indicates at least one of the braking condition and the de-acceleration condition.
